# EUROPÄISCHE PATENTSCHRIFT

(11) **EP 0 616 171 B1**
(45) Veröffentlichungstag und Bekanntmachung des Hinweises auf die Patenterteilung: **14.05.1997**
(21) Anmeldenummer: 94103483.7
(22) Anmeldetag: 08.03.1994
(51) Int. Cl.: F23N 1/02, F23N 5/00, G05B 13/02

(54) **Verfahren zur Regelung thermischer Prozesse**
Control method for thermal processes
Méthode de contrôle pour procédés thermiques

(30) Priorität: 13.03.1993 DE 4308055
(43) Veröffentlichungstag der Anmeldung: 21.09.1994
(73) Patentinhaber: RWE Entsorgung Aktiengesellschaft, 45141 Essen (DE)
(72) Erfinder: Wintrich, Franz, Dipl.-Ing., D-45309 Essen (DE); Kaiser, Dieter, Dipl.-Ing., D-44357 Dortmund (DE); Wintrich, Hartmut, Dipl.-Ing., D-45130 Essen (DE)

(56) Entgegenhaltungen:
- EP-A- 0 108 586
- EP-A- 0 183 990
- EP-A- 0 505 671
- GB-A- 2 169 726
- US-A- 4 248 625
- US-A- 4 362 499
- PATENT ABSTRACTS OF JAPAN vol. 12, no. 360 (M-746) (3207) 27. September 1988 & JP-A-63 116 017 (MEIDENSHA ELECTRIC MFG CO LTD) 20. Mai 1988

## Beschreibung

Die vorliegende Erfindung betrifft ein Verfahren zur Regelung thermischer Prozesse, wobei durch Meßvorrichtungen wenigstens zwei Prozeßparameter innerhalb eines Zeitintervalls wenigstens einmal gemessen werden, in dem eine Parameterveränderung auftritt, die für den Prozeßablauf nicht vernachlässigbar ist, die erfaßten Parameter einer Regeleinrichtung zugeführt werden und die Regeleinrichtung mit aus den Messungen der Prozessparameter gewonnenen Größen die Prozessparameter in dem thermischen Prozess regelt.

Die Steuerung thermischer Prozesse ist insbesondere im Hinblick auf Emissionen, wie z. B. Noₓ-, Dioxin-, Dibenzofuran-Emission, oder Staubbildung von sehr großer Bedeutung.

Thermische Prozesse sind nicht nur Verbrennungsprozesse zu verstehen, wie z. B. in Kraftwerken, in denen fossile Brennstoffe, Müll, Klärschlamm, Sondermüll und dgl. verbrannt werden, sondern auch autotherme Vergasungen, in denen Kohlenstoff enthaltende Materialien, wie z. B. die o. g. und zur Zeit vor allem Rückstandsöle aus der Rohölverarbeitung mit Wasserdampf umgesetzt werden. Da Vergasungen bei Temperaturen bis zu 2.000 °C ablaufen, wird ein Teil des Einsatzgutes verbrannt und auf diese Weise die für die endotherme Umsetzung kohlenstoffhaltiger Materialien mit Dampf erforderliche Temperatur aufrechtzuerhalten.

Im weiteren Sinne sind thermische Prozesse auch z. B. die Erzeugung von bestimmten Produkten, wie z. B. Acetylen im Lichtbogen, die Erzeugung von Olefinen im sogenannten Steamcracking-Verfahren oder Schlackefluß in schlackebildenden Prozessen. Die Aufzählung der thermischen Prozesse ist beispielhaft. Weitere thermische Prozesse sind dem Fachmann bekannt.

Zur Steuerung derartiger Prozesse werden nach dem Stand der Technik einzelne Prozeßparameter erfaßt und getrennt voneinander beurteilt. Durch Vergleich der Ist-Werte im Soll-Werten werden die einzelnen Eingangsgrößen weitgehend unabhängig voneinander geregelt.

Als Beispiel für wichtige Prozeßparameter seien genannt:

Die Temperatur, gebildete Radikale und Radikalkonzentrationen, Staubbeladung im Prozeß, Prozeßemissionen, Wirkungsgrad einer Rauchgasreinigung, Wirkungsgrad eines Elektrofilters, Abwassrverunreinigungen, Abwassermenge, p_{H}-Wert in einem Wäscher, erzeugte Dampfmenge bei vorhandenem Dampferzeuger und in Abhängigkeit von der Art des Prozesses weitere Parameter.

Da die Temperatur eine wichtige charakteristische Eigenschaft thermischer Prozesse darstellt, soll kurz auf Meßmethoden nach dem Stand der Technik eingegangen werden.

Bei einem mit einem Absaugpyrometer arbeitenden Verfahren wird beispielsweise eine gekühlte Lanze durch eine Schauluke eines Reaktors in einen Reaktionsraum gehalten und die Temperatur einer abgesaugten Gasmenge bestimmt. Es wird jeweils lediglich eine einzige lokale Temperatur gemessen.

Es sind auch berührungslose Verfahren zur Ermittlung der Temperatur von thermischen Prozessen bekannt. zur berührungslosen Ermittlung der Temperatur beispielsweise in einem Feuerraum eines Kohlekraftwerkes wurde vorgeschlagen, eine Vielzahl von akustischen Quelle-Detektoreinheiten in einer Ebene außenseitig an einer den Feuerraum umgebenden Wandung anzuordnen. Bei diesem Verfahren sendet eine Quelle-Detektoreinheit ein kurzzeitiges akustisches Signal, etwa einen Knall, aus, das von den jeweils anderen Quelle-Detektoreinheiten empfangen wird. Das Aussenden und Empfang von akustischen Signalen läßt sich in der Weise auswerten, daß die jeweilige Dichte von Verbrennungsgasen bestimmt wird und aus derselben auf eine bestimmten Temperatur geschlossen werden kann.

In EP-A-0108586 sind ein Verfahren und eine Vorrichtung offenbart, um Verluste bei der Verbrennung von Heizöl zu reduzieren, indem man die Belastung, den Wärmeverlust durch zugeführte Luft und nicht verbranntes Produkt mißt und hieraus charakteristische Verluste ermittelt und einen Luftbedarf ermittelt, der zu geringsten Verlusten führt.

Auch die Ermittlung von bei thermischen Prozessen entstehenden Radikalen zur Steuerung, z. B. von Müllverbrennungsvorgängen, ist ein wichtiger Parameter und ist gemäß EP-A-0317731 bekannt.

Art und Konzentration der Radikale in Bereichen des Prozeßablaufs liefern wesentliche Eigenschaften von Radikale bildenden Prozessen und Grundlagen zu deren Beurteilung und Kontrolle. Von besonderer Bedeutung ist hierbei die Kontrolle der NOₓ-Bildung. Die Art der Radikale und deren Konzentration lassen sich durch Aufnahme ausgesandter Strahlung, hauptsächlich in UV-Bereich, ermitteln. Radikale senden in bestimmten Wellenbereichen eine charakteristische Bandenstrahlung aus, aus deren Intensität auf die Radikalkonzentration geschlossen werden kann.

Auch die Strahlung von Feststoffen im Prozeßraum, wie z. B. von Stäuben, läßt sich durch Messung des Strahlungsspektrums erfassen. Im Unterschied zur Strahlung einzelner Moleküle handelt es sich bei der Partikelstrahlung jedoch um eine weitgehende bandenfreie Körperstrahlung.

Die zahlreichen Meßmethoden zur Ermittlung sonstiger Prozeßparameter sollen nicht näher erläutert werden, da sie dem Fachmann bekannt sind und aus dem Stand der Technik entnommen werden können.

Obgleich durch Messung einzelner Parameter Teilaussagen über einen jeweiligen Ist-Zustand eines thermischen Prozesses gemacht werden können, so daß bei Abweichungen von vorgegebenen Soll-Werten ein solcher Parameter über die Steuerung der Eingangsgrößen entsprechend gesteuert werden kann, ist es bisher nicht gelungen, die Gesamtsituation des thermischen Prozesses darzustellen und durch Erfassung einer Vielzahl wichtiger Prozeßparameter in einem bestimmten Zeitintervall den Prozeß als ganzes zu regeln.

Der Anmelderin ist es nunmehr gelungen, ausgehend von dieser Aufgabenstellung, den Ist-Zustand eines thermischen Prozesses in gewünschtem Umfang zu erfassen und die Prozeß-Eingangsgrößen und damit die Prozeßparameter so zu steuern, daß ein optimaler Prozeßablauf erreicht wird, durch ein Verfahren zur Regelung solcher thermischer Prozesse, wobei durch Meßvorrichtungen wenigstens zwei Prozeßparameter innerhalb eines Zeitintervalls wenigstens einmal gemessen werden, indem eine Parameteränderung auftritt, die für den Prozeßablauf nicht vernachlässigbar ist, die erfaßten Parameter einer Regeleinrichtung zugeführt werden und die Regeleinrichtung mit aus den Messungen der Prozeßparameter gewonnenen Größen die Prozeßparameter in dem thermischen Prozeß regelt, dadurch gekennzeichnet, daß die erfaßten Größen der Prozeßparameter durch einen in der Regeleinrichtung vorgesehenen Klassifikator zu Klassen verdichtet und zu einem Situations-lst-Wert zusammengefaßt werden und ein in der Regeleinrichtung vorhandener Korrelator den Situations-lst-Wert mit einem Situations-Soll-Wert korreliert.

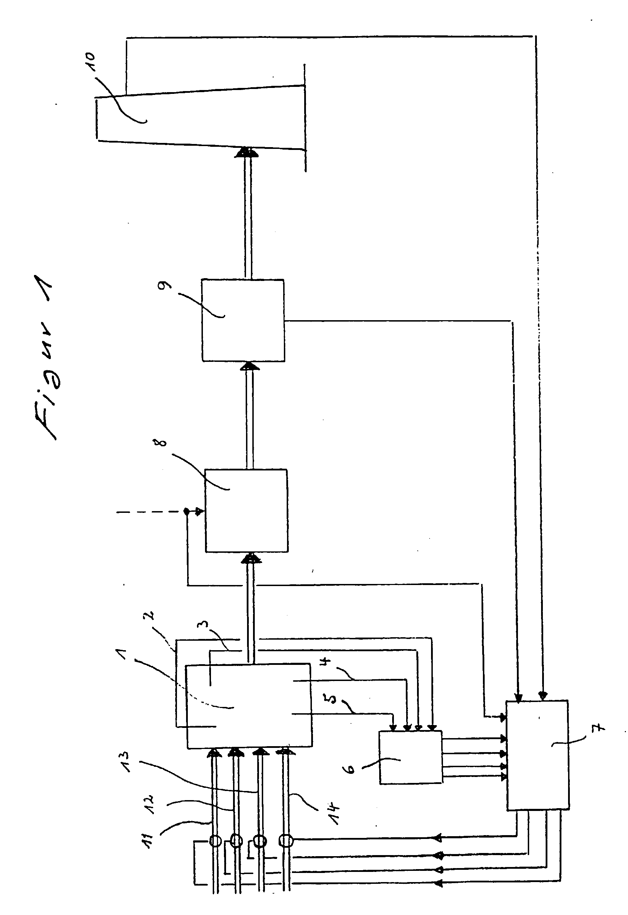

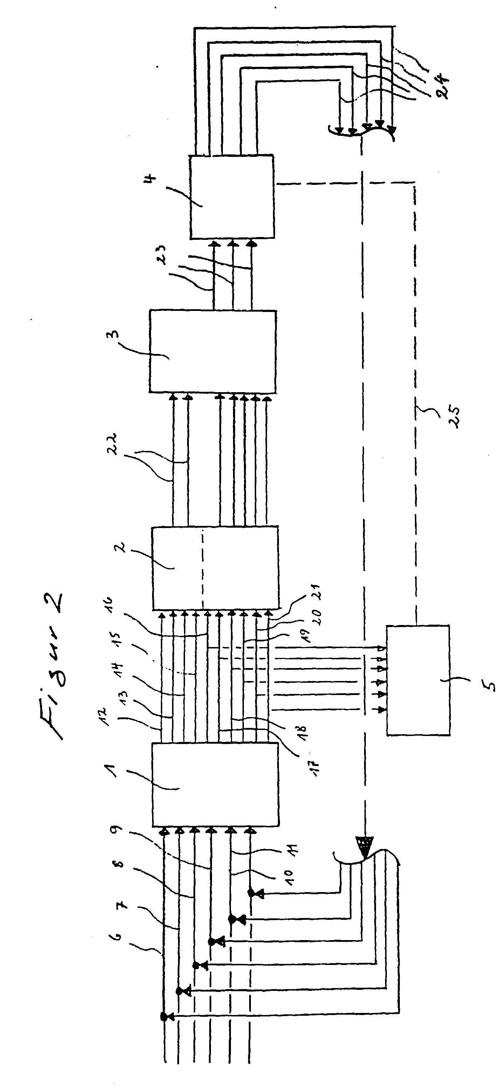

In den Figuren 1 und 2 sind eine Müllverbrennungsanlage und eine erfindungsgemäße Regelung dargestellt.

Erfindungsgemäß ist der Zeitraum, in dem wenigstens zwei bzw. mehrere Parameter gemessen werden, von großer Bedeutung.

Bei der Wahl eines genügend kurzen Zeitintervalls werden auf diese Weise alle nicht vernachlässigbaren Parameteränderungen erfaßt. In einem solchen Zeitraum können mehrere Messungen eines einzelnen Parameters durchgeführt werden. Im gleichen Zeitintervall werden jedoch erfindungsgemäß wenigstens zwei oder mehrere voneinander verschiedene Parameter ebenfalls gemessen. Es ist ersichtlich, daß der Parameter mit dem kürzesten Zeitintervall, in dem eine nicht vernachlässigbare Änderung eintritt, besonders maßgeblich ist, da sich Parameter mit längeren Zeitintervallen im kürzesten Zeitintervall nicht ändern und damit dem Parameter mit dem kürzesten Zeitintervall zugeordnet werden können.

Die erfindungsgemäße Regeleinrichtung enthält bevorzugt einen Klassefikator. In diesen gehen eine Vielzahl gemessener Daten ein, die klassifiziert werden. Der Klassifikator verdichtet hierbei die über diskrete Zeitintervalle gleichzeitig aufgenommenen Parameter größen zu einzelnen Klassen. Dies kann z. B. die Temperaturverteilung, die Konzentration von Gruppen von Radikalen, die örtliche Staubbeladung u. a. für Zonen eines Brennraumes sein. Zusätzlich können weitere ermittelte Daten anderer Stufen, wie z. B. aus dem Dampferzeuger, der Rauchgasreinigung oder der Abgasanalyse in den Klassefikator eingegeben werden, und dort entsprechend verdichtet zu werden. die derartig zu Klassen verdichteten Prozeßparameter größen erden zu einem Situations-lst-Wert zusammengefaßt, so daß sich die Vielzahl von erfaßten Prozeßparametern durch einen Wert kennzeichnen läßt, der, da über ein Zeitintervall ermittelt und klassifiziert, eine Situation im Verbrennungsraum darstellt. Ein in der Regeleinrichtung vorhandener Korrelator vergleicht diesen Wert mit einem Gesamtsollwert aus einer Vergleichseinrichtung und stellt eine Korrelation bzw. eine Abweichung oder Übereinstimmung fest. Je nach Abweichung oder Übereinstimmung können nun Regelstrategien bereitgestellt werden, um die Eingangsgrößen zu steuern. Es ist erfindungsgemäß auch möglich, bestimmte Gruppen von Prozeßparametern, wie z. B. lokale Prozeßparameter und Analysewerte aus der Rauchgasreinigung neben anderen Gruppen getrennt zu behandeln, so daß zwei oder mehrere Situations-lst-Werte gebildet werden und mit dem für die jeweilige Gruppe bereitgestellten Gesamtsollwert verglichen werden können. Hieraus können Regeleingriffe abgeleitet werden. Die Regeleinrichtung weist erfindungsgemäß zusätzlich eine Speicherbibliothek auf, in der Sollmeßwerte gespeichert sind, die mit den Situations-lst-Werten verglichen werden können.

Das angegebene Verfahren stellt demgemäß eine Gesamtsituation des thermischen Prozesses dar, da eine Vielzahl wichtiger Prozeßparameter gleichzeitig in eine Regeleinrichtung eingegeben werden können und erfindungsgemäß behandelt werden können, so daß der Prozeß als ganzes geregelt werden kann.

Die diskreten Zeitintervalle, in denen Messungen der Parameter vorgenommen werden, sind zunächst empirisch zu ermitteln.

Die Erfindung soll nunmehr beispielhaft mit Hilfe der Figuren 1 und 2 näher erläutert werden. Es ist hierbei zu berücksichtigen, daß der dargestellte Verbrennungsprozeß als ein typischer, thermischer Prozeß zur detaillierten Darstellung ausgewählt wurde. Dies ist jedoch nicht als eine Limitierung der vorliegenden Erfindung anzusehen, da das erfindungsgemäße Verfahren zur Prozeßregelung in analoger Weise für andere thermische Prozesse angewandt werden kann.

In Figur 1 stellt (1) den Kessel einer Müllverbrennungsanlage dar. Über die Meßeinrichtungen (2)-(5) werden bestimmte Parameter in Zonen des Kessels gemessen, wie z. B. Radikalkonzentrationen, Temperaturen oder Staubbelastungen. Die Meßdaten gelangen über (6) in die Regelvorrichtung (7), die einen Klassifikator, einen Korrelator, eine Vergleichseinrichtung und eine Speicherbibliothek aufweist.

In den Regler können zusätzliche Meßdaten gelangen, welche die zugesetzte Wassermenge in einen Dampferzeuger (8), den pH-Wert in einer Wäsche und den Abscheidungsgrad eines Elektro-Filters betreffen, wobei Wäsche und E-Filter Teile der Rauchgasreinigung (9) sind. Schließlich gelangen Meßwerte über Emissionen im gereinigten Abgas, wie z. B. SO₂, NOₓ, CO und CO₂ aus (10) in die Regelvorrichtung.

Durch Vergleich des Situations-lst-Wertes mit dem Situations-Soll-Wert aus der Speicherbibliothek werden Eingangsgrößen (11)-(14) gesteuert.

In Figur 2 ist die Regeleinrichtung einer Großfeuerung in Verbindung mit den gemessenen Daten dargestellt.

Im Verbrennungsraum (1) gehen verschiedene Eingangsgrößen (6)-(11) ein, zu deren Regelung einzelne Parameter ermittelt werden. Dies betrifft lokale Parameter wie Radikalkonzentration, Temperaturverteilung, Staubbelastung, Analysen des Rauchgases sowie Kenndaten anderer Aggregate. In den Klassifikator (2) geht nun eine Vielzahl von Daten (12)-(21) ein, die klassifiziert werden. Der Klassifikator verdichtet hierbei die über diskrete Zeitintervalle gleichzeitig aufgenommenen Daten der Parameter zu einzelnen Klassen. Die Messung der Parameter kann beispielsweise in Zonen eines Brennraums für Gruppen von Radikalen (12)-14) mit gleichzeitiger Verdichtung der Temperaturverteilung (15) sowie der örtlichen Staubbeladung (20) geschehen. Desgleichen gehen gemessene bzw. ermittelte Daten anderer Stufen, wie z. B. aus Dampferzeuger (21), Rauchgasreinigung oder Reingasanalysen (16)-(19) in den Klassifikator ein, um entsprechend verdichtet zu werden. Die derartig verdichteten Prozeßparameter daten (22) sind nun in Klassen eingeordnet und werden zu einem Situations-lst-Wert zusammengefaßt (3), so daß die Vielzahl an erfaßten Größen der Prozeßparametern durch einen Wert gekennzeichnet sind, der, da über einen Zeitintervall ermittelt und klassifiziert wurde, eine Situation im Verbrennungsraum darstellt. Der Korrelator (4) vergleicht diesen Wert (23) mit einem Gesamt-Soll-Wert aus einer Vergleichseinrichtung, ebenfalls (4) und stellt eine Korrelation bzw. eine Abweichung oder Übereinstimmung fest. Je nach Abweichung oder Übereinstimmung können nun Regelstrategien bereitgestellt werden, um die Eingangsgrößen über Stellsignale (24) zu regeln. Es ist auch vorsehbar, daß bestimmte Gruppen von Prozeßparametern, wie z. B. lokale Prozeßparameter und Analysenwerte aus der Rauchgasreinigung sowie andere Stufen getrennt behandelt werden, so daß 2 oder 3 Situations-lst-Werte (23) gebildet werden und mit dem für die jeweilige Gruppe bereitgestellten Gesamt-Soll-Wert verglichen werden und daraus Regeleingriffe abgeleitet werden. Die Regeleinrichtung weist zusätzlich eine Speicherbibliothek (5) auf, in die Daten von den ermittelten Prozeßparametern eingehen. Die Speicherbibliothek steht über (25) der Vergleichseinrichtung für anfängliche Lernvorgänge und nachträgliche Kontrollen zur Verfügung.

Das erfindungsgemäße Verfahren erlaubt es demgemäß, eine Gesamtsituation des Verbrennungsprozesses darzustellen und insbesondere eine Vielzahl wichtiger Prozeßparameter in einem gleichen Zeitraum in eine Regeleinrichtung einzugeben, so daß der Prozeß als Ganzes geregelt werden kann.

## Patentansprüche

1. Verfahren zur Regelung thermischer Prozesse, wobei durch Meßvorrichtungen wenigstens zwei Prozeßparameter innerhalb eines Zeitintervalls wenigstens einmal gemessen werden, indem eine Parameteränderung auftritt, die für den Prozeßablauf nicht vernachlässigbar ist, die erfaßten Parameter einer Regeleinrichtung zugeführt werden und die Regeleinrichtung mit aus den Messungen der Prozeßparameter gewonnenen Größen die Prozeßparameter in dem thermischen Prozeß regelt, dadurch gekennzeichnet, daß die erfaßten Größen der Prozeßparameter durch einen in der Regeleinrichtung vorgesehenen Klassifikator zu Klassen verdichtet und zu einem Situations-lst-Wert zusammengefaßt werden und ein in der Regeleinrichtung vorhandener Korrelator den Situations-lst-Wert mit einem Situations-Soll-Wert korreliert.

2. Verfahren nach Anspruch 1, dadurch gekennzeichnet, daß durch aus einer Korrelation von Situations-lst-Wert und Situations-Soll-Wert erhaltene Vergleichswerte, Eingangsgrößen gesteuert werden.

3. Verfahren nach wenigstens einem der Ansprüche 1 und 2, dadurch gekennzeichnet, daß Gruppen von Prozeßparametern zu getrennten Situations-lst-Werten zusammengefaßt werden und daß diese im Korrelator mit der jeweiligen Gruppe entsprechenden Situations-Soll-Werten korreliert werden.

4. Verfahren nach wenigstens einem der Ansprüche 1 bis 3, dadurch gekennzeichnet, daß die Position der Meßvorrichtungen in Abhängigkeit von den gemessenen Parameterdaten eingestellt werden.

5. Verfahren nach wenigstens einem der Ansprüche 1 bis 5, dadurch gekennzeichnet, daß als Prozeßparameter die Radikalkonzentration in diskreten Bereichen im thermischen Prozeß gemessen wird.

6. Verfahren nach wenigstens einem der Ansprüche 1 bis 5, dadurch gekennzeichnet, daß die Temperatur in diskreten Bereichen im thermischen Prozeß gemessen wird.

7. Verfahren nach wenigstens einem der Ansprüche 1 bis 6, dadurch gekennzeichnet, daß die Staubkonzentration in diskreten Bereichen im thermischen Prozeß gemessen wird.

8. Verfahren nach wenigstens einem der Ansprüche 1 bis 7, dadurch gekennzeichnet. daß der thermische Prozeß eine Verbrennung ist.

9. Verfahren nach wenigstens einem der Ansprüche 1 bis 8, dadurch gekennzeichnet, daß der thermische Prozeß eine Vergasung ist.

10. Vorrichtung zur Regelung thermischer Prozesse umfassend Meßvorrichtungen zur Messung von Prozeßparametern in bestimmten Zeitintervallen und eine Regeleinrichtung. dadurch gekennzeichnet, daß die Regeleinrichtung einen die erfaßten Größen der Prozeßparameter zu Klassen verdichtenden und zu einem Situations-Ist-Wert zusammenfassenden Klassifikator aufweist und einen Korrelator, der den gebildeten Situations-lst-Wert mit einem Situations-Soll-Wert korreliert.

## Claims

1. Process for automatic control of thermal processes, whereby by measuring devices at least two process parameters are measured at least once during a time interval, within which a parameter change occurs, which is not negligible for the course of the process, the parameters recorded are supplied to a controlling device and the controling device controls the process by values, which habe been obtained from the measurement of the process parmeters, characterized in that the recorded values of the process parmeters are concentrated to classes by a classifier, which is installed within the control device and are combined to a situation actual value and a correlator installed within the control device correlates the situation actual value with a situation reference value.

2. Process according to claim 1, characterized in that by comparative values, which are obtained by correlation of situation actual value and situation reference value, input values are controlled.

3. Process according to at least one of claims 1 and 2, characterized in that groups of process parameters are combined to form separate situation actual values and that these values are correlated within the correlatur with situation reference values corresponding to the respective group.

4. Process according to at least one of claims 1 to 3 characterized in that the position of the measuring devices is adjusted depending on the measured parameter values.

5. Process according to at least one of claims 1 to 4, characterized in that as a process parameter the radical concentration is determined within discrete areas in the thermal process.

6. Process according to at least one of claims 1 to 5, characterized in that the temperature is determined within discrete areas in the thermal process.

7. Process according to at least one of claims 1 to 6, characterized in that the dust concentration is determined within discret areas in the thermal process.

8. Process according to at least one of claims 1 to 7, characterized in that the thermal process is an incineration.

9. Process according to at least one of claims 1 to 8, characterized in that the thermal process is a gasification.

10. Device for controling thermal processes embracing measuring devices for measuring process parameters in discrete time intervals and a controling device, characterized in that the controling device contains a classifier, which concentrates the recorded values to classes and combines the classes to a situation actual value and a correlator, which correlates the situation actual value formed with a situation reference value.

## Revendications

1. Procédé pour régler des procédés thermiques, à l'occasion de quoi par des appareil de mesure au moins deux paramètre du procédé sont mesurés au moins une fois dans un intervalle de temps dans lequel un changement d' un paramètre se produit, quel n'est pas négligible et à l'occasion de quoi les paramètre recencés sont amenés à un èquipement de réglage et l'équipment de réglage règle les paramètre du procédé dans le procédé thermique avec des quantités gagués des mesurages des paramètres du procédé, caractérisé en ce que les quantités des paramètres du procédé recensés sont comprimés aux classes par un classificateur présent dans l'équipement de réglage et sont concentrées à une valeur effective de la situation et en ce que un corrélateur présent dans l'équipement de réglage corrèle la valeur effective de la situation avec la cote demandée de la situation.

2. Procédé selon la revendication 1, caractérisé en ce que des grandeurs d' entrée sont commandées par des valeurs comparatives obtenues d' une corrélation d' une valeur effective de la situation et la cote demandée de la situation.

3. Procédé suivant l'une quelconque des revendication précédentes, caractérisé en ce que des groupes des paramètres du procédé sont concentrés aux valeurs effectives de la situation separées et que celle-ci sont corrélées dans le corrélateur avec des cotes demandées de la situation correspondantes au group respectif.

4. Procédé suivant l'une quelconque des revendication précédentes, caractérisé an ce que la position des appareil de mesure est adjustée dependent des paramétre données mesurées.

5. Procédé suivant l'une quelconque des revendications, caractérisé en ce que comme paramètre du procédé la concentration des radicals est mesurée en zones discrétes dans le procédé thermique.

6. Procédé suivant l'une quelconque des revendications, caractérisé que la températur est mesurée en zones discrétes dans le procédé thermique.

7. Procédé suivant l'une quelconque des revendications, caractérisé en ce que la concentration de la poussieré est mesuré en zones discrétes dans le procédé thermique.

8. Procédé suivant l'une quelconque des revendication, caractérisé an ce que le procédé thermique est une combustion.

9. Procédé suivant l'une quelconque des revendividation, caractérisé que le procédé thermique est une gazification.

10. Dispositif pour le réglage des procédés thermique comprenand appareil de mesure pour mesurer des parmètres d' un procédé dans des intervalles de temps définis, caractérisé en ce que, l'equipment de réglage contient un classificateur, quel comprime les quantitées des paramètres du procédé aux classes et les concentre à une valeur effective de la situation et un corrélateur quel corrèle la valeur effective de la situation avec la cote demandée de la situation.
